# EUROPÄISCHE PATENTSCHRIFT

(11) **EP 0 296 146 B1**
(45) Veröffentlichungstag und Bekanntmachung des Hinweises auf die Patenterteilung: **03.11.1993**
(21) Anmeldenummer: 88890135.2
(22) Anmeldetag: 06.06.1988
(51) Int. Cl.: B29C 55/00, B29D 7/00

(54) **Verfahren zur Herstellung von hochtemperaturbeständigen Folien**
Process of producing high-temperature resistant films
Procédé pour la production de films résistants aux températures élévées

(30) Priorität: 09.06.1987 AT 1446/87
(43) Veröffentlichungstag der Anmeldung: 21.12.1988
(73) Patentinhaber: Lenzing Aktiengesellschaft, A-4860 Lenzing (AT)
(72) Erfinder: Harms, Haio, Dr., A-4810 Gmunden (AT); Schobesberger, Manfred, A-4863 Seewalchen (AT); Söllradl, Herbert, Dr. Dipl.-Ing., D-8261 Emmerting (DE); Weinrotter, Klaus, Dr. Dipl.-Ing., A-4840 Vöcklabruck (AT)
(74) Vertreter: Müllner, Erwin, Dr.

(56) Entgegenhaltungen:
- US-A- 3 247 165
- US-A- 3 441 640
- US-A- 4 603 061
- DATENBANK WPIL, Nr. 74-54297V [30], Derwent Publications Ltd, London, GB; & JP-A-48 100 460 (TORAY)
- DATENBANK WPIL, Nr. 84-259715 [42], Derwent Publications Ltd, London, GB; & JP-A-59 157 319 (AGENCY OF IND. SCI. TECH.)
- DATENBANK WPIL, Nr. 84-265934 [43], Derwent Publications Ltd, London, GB; & JP-A-59 161 432 (UBE INDUSTRIES)
- DATENBANK CHEMICAL ABSTRACTS (STN), Band 82, Nr. 16, 1974, Zusammenfassung Nr. 99510u, Columbus, Ohio, US; & JP-A-49 029 949 (TORAY)

## Beschreibung

Die Erfindung betrifft ein Verfahren zur Herstellung von hochtemperaturbeständigen Folien aus Polyimid-Polymerisaten, wobei eine Lösung des Polymerisates in einem organischen Lösungsmittel durch eine Schlitzdüse einer Filmbildungseinrichtung ausfließen und in einem das organische Lösungsmittel enthaltenden wässerigen Fällbad koagulieren gelassen wird, die aus koaguliertem Film bestehende Folie abgezogen, das organische Lösungsmittel entfernt und die Folie getrocknet wird.

Als hochtemperaturbeständige Polyimid-Polymerisate kommen in erster Linie solche in Betracht, die Struktureinheiten der allgemeinen Formel 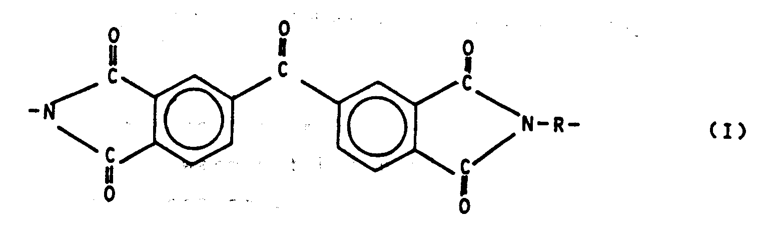
enthalten, worin R für 2,4- und/oder 2,6-Toluylen oder für eine Gruppe der Formel 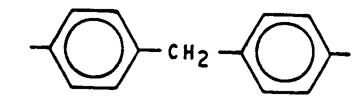
steht. Zur Herstellung des hochtemperaturbeständigen Polymerisates wird vorzugsweise Benzophenon-3,3',4,4'-tetracarbonsäure und 4-Methyl-1,3-phenyldiamin und 4,4'-Methylenbis (phenylamin) eingesetzt.

Ein Verfahren der eingangs definierten Art ist aus der US-A - 4,426,486 bekannt, wobei ein in einer Schlitzdüse gebildeter Film einer erwärmten, mindestens 40 %igen Lösung eines Polyimid-Polymerisates in Dimethylformamid auf die Oberfläche einer gekühlten Trommel fallengelassen wird. Die Trommel greift mit ihrem Unterteil in ein aus Dimethylformamid und Wasser zusammengesetztes Extraktionsbad ein; die an der Oberfläche der Trommel enstandene Folie wird über ein aus Walzen gebildetes Abziehwerk abgezogen, das organische Lösungsmittel beim Durchlauf durch ein wässeriges Waschbad entfernt und die Folie schließlich getrocknet.

Bei der Bildung des Filmes sind seine Oberflächen einerseits mit der Trommelaußenfläche und anderseits mit dem wässerigen Extraktionsbad in Kontakt. Dabei entsteht ein durchsichtiger Aquagelfilm mit einem Gehalt von etwa 30 % Wasser.

Um eine ausreichende Festigkeit derart hergestellter Folien zu gewährleisten, ist es notwendig, den Aquagelfilm in Maschinenrichtung und quer zur Maschinenrichtung zu orientieren, anschließend erfolgt das Trocknen der Folie. Durch das biaxiale Orientieren der Folie wird die Randzone des Filmes beschädigt, daraus ergibt sich unerwünschter Abfall, der als breiter Randstreifen abgetrennt werden muß.

Die Erfindung stellt sich die Aufgabe, hochtemperaturbeständige Folien aus Polyimid-Polymerisaten herzustellen, wobei während der Bildung des Filmes beide Oberflächen gleichmäßig mit dem Fällbad in Kontakt sind und kein durchsichtiges Aquagel gebildet wird. Weiters soll durch das Verfahren ermöglicht werden, handelsübliche Polymerlösungen ohne weiteres Aufkonzentrieren zu verwenden. Die Festigkeitseigenschaften sind ohne Orientierung ausreichend und unerwünschter Schrumpf bei erhöhten Temperaturen wird vermieden. Außerdem soll es möglich sein, durch Vermeidung des Mono- oder Biaxialorientierungsschrittes, der zu einem unvermeidlichen Dickenverlust des Filmes führt, eine dünnere und damit leichter extrahierbare Primärfolie herzustellen.

Die Erfindung besteht darin, daß der in der Schlitzdüse gebildete Film über einen kurzen Luftspalt von z.B. 3 - 5 mm Länge direkt in das wässerige Fällbad frei fallengelassen wird, die gebildete Folie aus dem Fällbad abgezogen, einer anschließenden Wärmebehandlung unterworfen, das organische Lösungsmittel sodann durch Behandlung mit einem wässerigen Extraktionsmittel entfernt und die Folie schließlich getrocknet wird.

Bei dieser Behandlung wird die im Fällbad gebildete, weiße, undurchsichtige Folie durch eine Wärmebehandlung in eine durchsichtige, goldgelbe Folie übergeführt.

Vorteilhaft wird die Wärmebehandlung der im Fällbad gebildeten Folie unter Zufuhr von Warmluft bei einer Temperatur von 40 bis 130°C durchgeführt.

Nach einer bevorzugten Ausführungsform wird die Extraktion der wärmebehandelten Folie stufenweise, zuerst mit einem aus organischem Lösungsmittel und Wasser bestehenden Bad und anschließend mit reinem Wasser bei einer Temperatur von 70 bis 100°C durchgeführt.

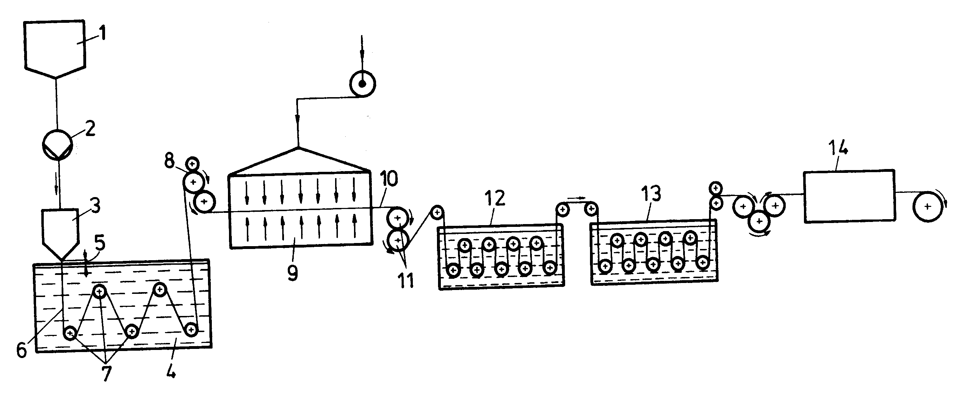

Das erfindungsgemäße Verfahren wird in Verbindung mit der Zeichnung, die das Verfahrensschema wiedergibt, näher erläutert.

Eine Lösung eines Polymerisates, hergestellt aus Benzophenon-3,3',4,4'-tetracarbonsäure, 4-Methyl-1,3-phenyl-diamin und 4,4'-Methylenbis (phenylamin) in Dimethylformamid mit einer Polymerkonzentration von 25 % wird aus einer Druckvorlage 1 und einem Druck von 5 bar über eine Zahnradpumpe 2 einer Breitschlitzdüse 3 mit einem Schlitzdurchmesser von 0,8 mm zugeführt und die aus dem Schlitz austretende Spinnlösung, die einen Filmvorhang bzw. -schleier bildet, in das Fällbad 4 fallengelassen. Zwischen der Düse und der Oberfläche der Fällungslösung befindet sich ein Luftspalt 5 in der Dimension von 3 bis 5 mm. Die Einhaltung dieses Spaltes bzw. Abstandes ist deshalb wichtig, um einen direkten Kontakt zwischen Fällbad und Schlitzdüse zu vermeiden.

Das Fällbad besteht aus einer Lösung von 40 bis 80 % Dimethylformamid und 20 bis 60 % Wasser. Die Temperatur beträgt 10 bis 25°C. Der Filmvorhang ist während des Durchfallens durch den Luftspalt 5 und im Fällbad 4 selbst beidseitig von den gleichen Medien umgeben. Unter diesen Bedingungen entsteht eine weiße, undurchsichtige Folie 6 anstatt eines durchsichtigen Aquagels. Die gebildete Folie wird über die Umlenkrollen 7 abgezogen und nach einer Vortrocknung 8 einer Wärmebehandlungszone 9 zugeführt; diese Zone wird im dargestellten Beispiel von einer Warmluftkammer gebildet.

Der Wärmebehandlungszone wird über ein Gebläse Warmluft zugeführt. Beim Durchgang der Folie durch die Warmluftkammer passiert sie einen Temperaturbereich von 50°C beim Eingang und bis zu 115°C beim Ausgang. Bei dieser Wärmebehandlung wird ein Teil des Dimethylformamids und das gesamte enthaltene Restwasser entfernt, wobei die undurchsichtige Folie einer Art Phasenumwandlung unterworfen und durchsichtig goldgelb wird. Elektronenmikroskopische Aufnahmen der Folie in diesem Stadium, d.h. vor und nach der "Aufklarung", zeigen, daß die mikroporöse Struktur des undurchsichtigen Films verschwindet und eine homogene durchsichtige Folie 10 gebildet worden ist.

Die Folie 10 wird nach der Phasenumwandlung in der Wärmebehandlungszone kurzzeitig erhitzt, z.B. mittels Heizwalzen 11, womit eine Nachtrocknung und Verfestigung (Verhornung) eintritt. Diese Verhornung verhindert eine Wiederausfällig in den nachfolgenden Waschbädern. Die wärmebehandelte Folie wird sodann mit einem wässerigen Medium extrahiert, u.zw. mindestens zweistufig, wobei in der ersten Stufe in einer Extraktionswanne 12 eine Extraktionslösung von Dimethylformamid/Wasser im Verhältnis von 60 bis 70 : 40 bis 30 bei einer Temperatur von 70 bis 95°C, und in der zweiten Stufe in einer Extraktionswanne 13 Wasser mit einer Temperatur von 95°C als Extraktionsmittel verwendet wird.

Anschließend wird die extrahierte Folie abgequetscht, in einem Trockner 14 getrocknet und formatiert.

Die hergestellte Folie hat die folgenden Eigenschaften:

| | |
|---|---|
| Dicke | 33 mym |
| Zugfestigkeit (MR) | 135 N/mm² |
| Dehnung | 21 % |
| Zugmodul | 2900 N/mm² |

Der Glasumwandlungspunkt liegt bei 310°C,
die Dauertemperaturbeständigkeit bei 250°C.

Wird als Ausgangsmaterial das handelsübliche Polymerisat P84 (Hersteller: Lenzing AG), das aus Benzophenon-3,3',4,4'-tetracarbonsäuredianhydrid, 4,4'-Methylen-bis(phenylisocyanat) und 2,4- und 2,6-Toluylendiisocyanat hergestellt wird, eingesetzt und wie oben beschrieben verarbeitet, so wird eine Folie mit praktisch identischen Eigenschaften erhalten.

## Patentansprüche

1. Verfahren zur Herstellung von hochtemperaturbeständigen Folien aus Polyimid-Polymerisaten, wobei eine Lösung des Polymerisates in einem organischen Lösungsmittel durch eine Schlitzdüse (3) einer Filmbildungseinrichtung ausfließen und in einem das organische Lösungsmittel enthaltenden wässerigen Fällbad (4) koagulieren gelassen wird, die aus koaguliertem Film bestehende Folie (6) abgezogen, das organische Lösungsmittel entfernt und die Folie (6) getrocknet wird, dadurch gekennzeichnet, daß der in der Schlitzdüse (3) gebildete Film über einen kurzen Luftspalt (5) von z.B. 3 - 5 mm Länge direkt in das wässerige Fällbad (4) frei fallengelassen wird, die gebildete Folie (6) aus dem Fällbad (4) abgezogen, einer anschließenden Wärmebehandlung unterworfen, das organische Lösungsmittel sodann durch Behandlung mit einem wässerigen Extraktionsmittel entfernt und die Folie schließlich getrocknet wird.

2. Verfahren nach Anspruch 1, dadurch gekennzeichnet, daß die im Fällbad gebildete, weiße, undurchsichtige Folie (6) durch eine Wärmebehandlung in eine durchsichtige, goldgelbe Folie (10) übergeführt wird.

3. Verfahren nach Anspruch 1, dadurch gekennzeichnet, daß die Wärmebehandlung der im Fällbad gebildeten Folie (6) unter Zufuhr von Warmluft bei einer Temperatur von 40 bis 130°C durchgeführt wird.

4. Verfahren nach Anspruch 1, dadurch gekennzeichnet, daß die Extraktion der wärmebehandelten Folie (10) stufenweise, zuerst mit einem aus organischem Lösungsmittel und Wasser bestehenden Bad und anschließend mit reinem Wasser bei einer Temperatur von 70 bis 100°C durchgeführt wird.

## Claims

1. Process for the production of polyimide-polymerisate films, stable at high temperatures, wherein a solution of the polymerisate in an organic solvent flows out of a slit nozzle (3) of a film formation installation and is allowed to coagulate in an aqueous precipitation bath (4) containing the organic solvent, the film (6) consisting of a coagulated skin is drawn off, the organic solvent is removed and the film (6) is dried, characterised in that the skin formed in the slit nozzle (3) is dropped freely via a short air-gap of length e.g. 3-5mm directly into the aqueous precipitation bath (4), the film (6) formed, drawn off out of the precipitation bath (4), is subjected to an adjacent heat-treatment, the organic solvent is then removed by treatment with an aqueous extraction medium and finally the film is dried.

2. Process according to claim 1, characterised in that the white, opaque film (6) formed in the precipitation bath is converted by a heat-treatment into a transparent, golden-yellow film (10).

3. Process according to claim 1, characterised in that the heat-treatment of the film (6) formed in the precipitation bath (6) is carried out under a supply of hot air at a temperature of 40 to 130°C.

4. Process according to claim 1, characterised in that the extraction of the heat-treated film (10) is carried out by steps, first with a bath consisting of organic solvent and water and subsequently with pure water at a temperature of 70 to 100°C.

## Revendications

1. Procédé de fabrication de feuil résistants à des températures élevées en polymérisat à base de polyimide, dans lequel une solution de polymérisat dans un solvant organique s'écoule au travers d'une tête de filière en forme de fente (3) d'un appareil de formation de film et est laissée coaguler dans un bain de précipitation (4) aqueux contenant le solvant organique, le feuil (6) se composant du film coagulé est retiré, le solvant organique est évacué et le feuil (6) séché, caractérisé en ce qu'on laisse tomber librement le film formé dans la tête de filière (3) au travers d'un intervalle d'air faible (5), par exemple d'une longueur de trois à cinq millimètres directement dans le bain de précipitation aqueux (4) en ce qu'on retire le feuil formé (6) du bain de précipitation (4), en ce qu'on réalise un traitement thermique ultérieur, en ce que l'on évacue le solvant organique par traitement avec un agent d'extraction aqueux et en ce que l'on sèche finalement le feuil.

2. Procédé selon la revendication 1, caractérisé en ce que le feuil opaque blanche formé dans le bain de précipitation (6) est transformé par un traitement thermique en un feuil transparent jaune doré.

3. Procédé selon la revendication 1, caractérisé en ce que le traitement thermique du feuil (6) formé dans le bain de précipitation est réalisé par amenée d'air chaud à une température de 40 à 130°C.

4. Procédé selon la revendication 1, caractérisé en ce que l'extraction du feuil traité à chaud (10) est mise en oeuvre par étapes, d'abord à l'aide d'un bain formé d'un solvant organique et d'eau puis avec de l'eau pure à une température de 70 à 100°C.
